# EUROPEAN PATENT SPECIFICATION

(11) **EP 1 718 812 B1**
(45) Date of publication and mention of the grant of the patent: **15.12.2010**
(21) Application number: 05710943.1
(22) Date of filing: 11.02.2005
(51) Int. Cl.: E04B 1/61, F16B 5/00

(54) **DEVICE FOR CONNECTING STRUCTURAL ELEMENTS**
VORRICHTUNG ZUR VERBINDUNG VON KONSTRUKTIONSELEMENTEN
DISPOSITIF PERMETTANT DE RELIER DES ELEMENTS STRUCTURAUX

(30) Priority: 13.02.2004 NO 20040648
(43) Date of publication of application: 08.11.2006
(73) Proprietor: Guttormsen, Ove Kornelius, 0452 Oslo (NO)
(72) Inventor: Guttormsen, Ove Kornelius, 0452 Oslo (NO)
(74) Representative: Roman Ekstedt, Måns
(86) International application number: PCT/NO2005/000047
(87) International publication number: WO 2005/078205

(56) References cited:
- CA-A- 905 078
- GB-A- 130 911
- US-A- 2 793 407
- US-A- 3 037 593
- US-A- 3 683 429
- US-A- 5 244 300

## Description

The present invention relates to a device for connecting structural elements, as disclosed in the preamble of attached claim 1.

Technical solutions for connecting structural elements are already known, where the device consists of a male component and a female component having over at least a part of their length wedge-shaped engaging parts with an almost dovetail-like, gradually decreasing cross-section, and where the male component and the female component are mountable on a face or an edge of the structural elements in order, on movement of the structural elements relative to each other, to cause the male and female components to engage wedgingly.

CA 905078 A discloses a connector for connecting a pair of structural components, wherein a female member has a lip at the narrower end thereof, which lip supposedly acts as stop to limit extent to which a male member can be driven into the female member.

US 2793407 discloses an interlocking dovetailed connector, wherein a female dovetailed member has an end or bottom wall supposedly serving as a stop for a male dovetailed member.

GB 130911 A discloses a dovetail connection for bedsteads and other furniture, wherein a socket member has a closure c7 to the bottom of the socket.

To further illustrate the state of the art, reference is made to the Applicant's international application, WO 02/052108-A1.

However, it has often been found that the disengagement of such structural elements that are joined in this way frequently involves difficulties because the wedging action causes deformation or material strain of the engaging parts.

Therefore, the object of the present invention is to avoid the said known problems.

According to the invention the device is characterised by the features that are set forth in independent claim 1.

Additional embodiments of the invention are apparent from the attached, respective subsidiary claims 2-6, and the following description with reference to Figs. 2, 3, 5, and 7.

The invention will now be described in more detail with reference to the attached drawings.
Figs. 1a-1e show a first embodiment of the device not belonging to the invention.
Figs. 2a-2d show a second embodiment of the device according to the invention.
Figs. 3a-3c show a third embodiment of the device according to the invention, and Figs. 3d-3e show this embodiment mounted on structural elements.
Figs. 4a-4d show a fourth embodiment of the device not belonging to the invention, and Fig. 4e shows a typical use of this device.
Figs. 5a-5d show a fifth embodiment of the device not belonging to the invention, and Figs. 5e-5h show a variant of this embodiment.
Figs. 6a-6c show a sixth embodiment of the device not belonging to the invention.
Fig. 7 shows a seventh embodiment of the device according to the invention.
Figs. 8a-8c show an eighth embodiment of the device according to the invention.
Figs. 9a-9c show a ninth embodiment of the device according to the invention.

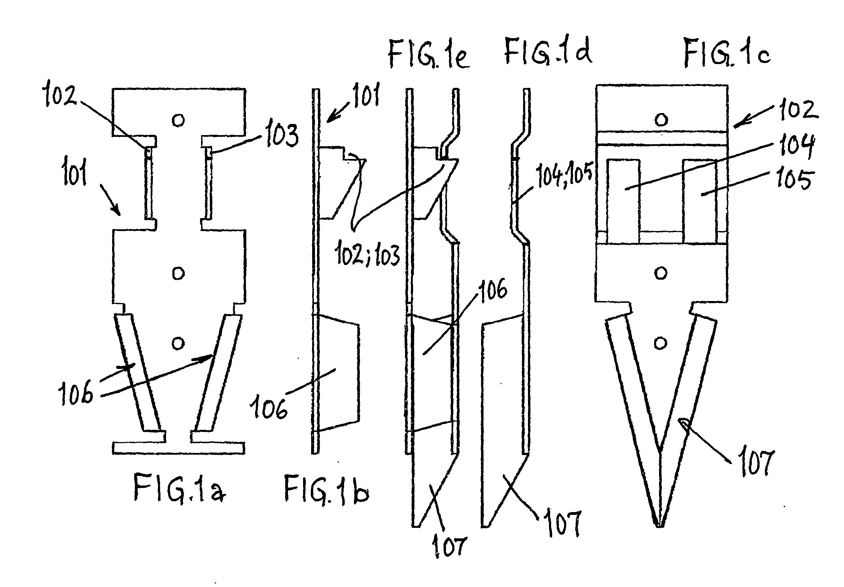

Figs. 1a and 1b are respectively an elevational view and a side view the female part of the device indicated by the reference numeral 101. The male part is indicated by the reference numeral 102. On the female part there are two portions 102, 103 which are designed to engage with recesses 104, 105 in the male part. Furthermore, the female part has a wedge portion 106 designed to cooperate with a wedge portion 107 on the male part.

Fig. 1e shows the male part and the female part joined together, with abutting portions 102, 103 in cooperation with the cut-outs 104, 105.

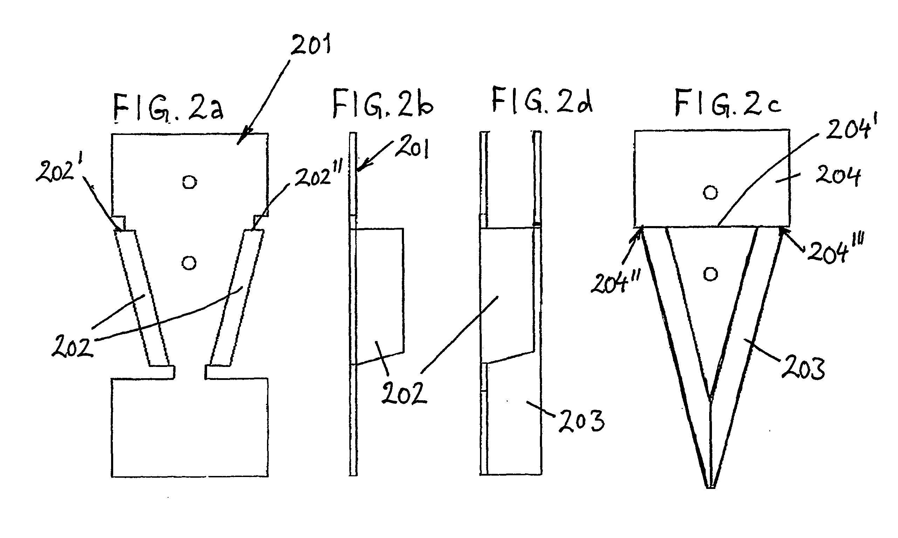

Fig. 2a shows a female part 201, and Fig. 2b is a side view of the female part. The female part has a wedge-shaped engaging portion 202 that is adapted to cooperate with a corresponding wedge-shaped engaging portion 203 on the male part, as is indicated in Figs. 2c and 2d. The male component is also equipped with a top portion 204, the bottom edge of which at the outer ends 204', 204" is designed to rest against an upper edge 202', 202" of the wedge 202 on the female part 201.

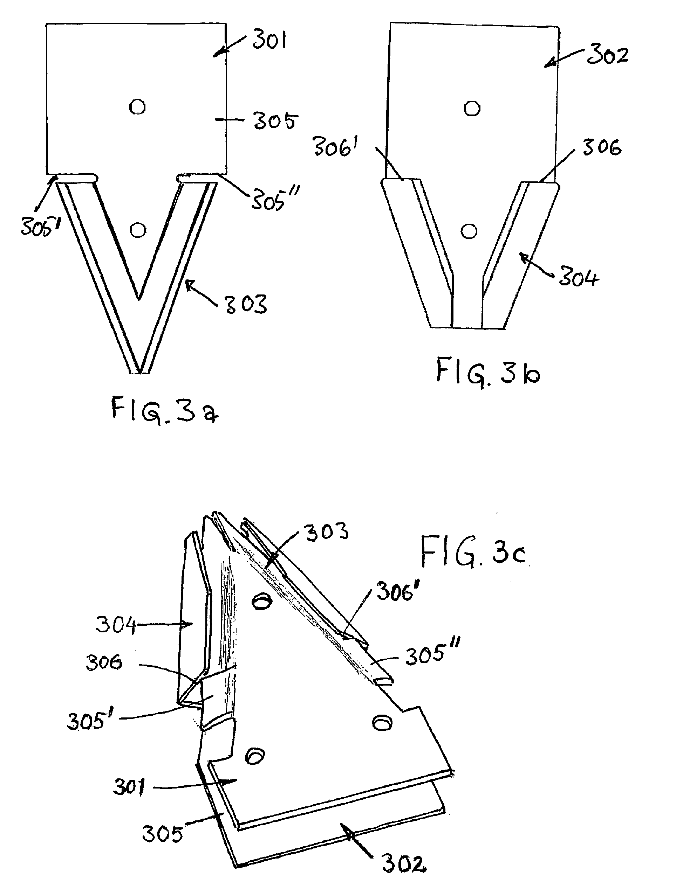

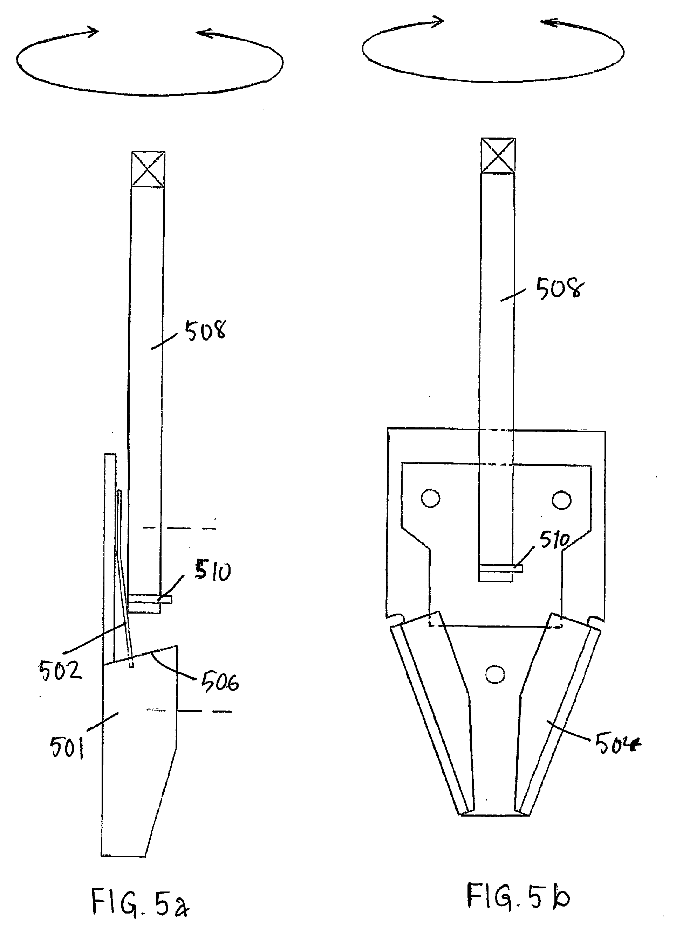

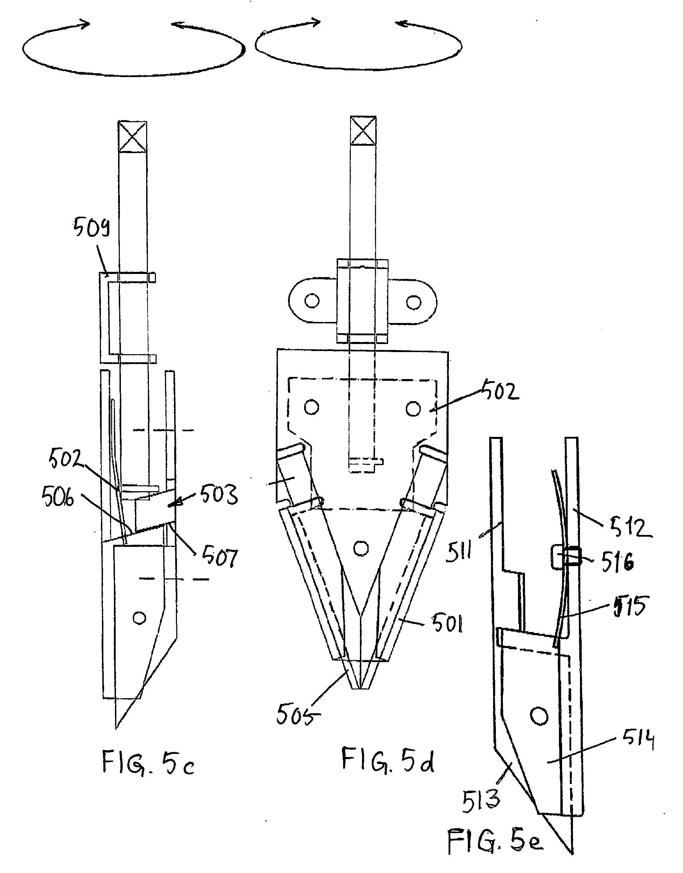

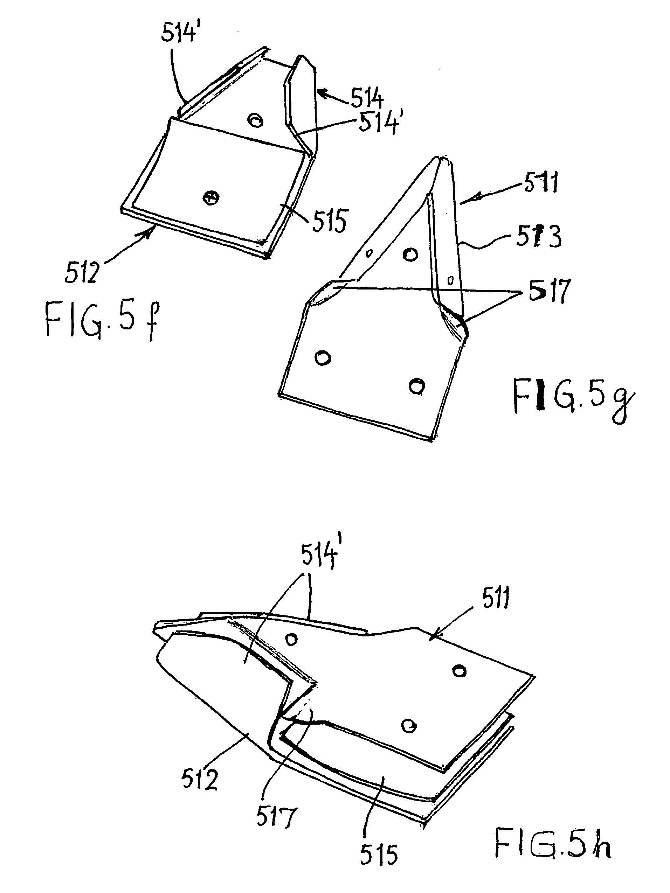

Figs. 3a and 3b show a variant of the solution shown in Fig. 2. The male part in this figure is indicated by the reference numeral 301 and the female part by the reference numeral 302. The male part has a wedge-shaped portion 303 for wedging engagement with a wedge portion 304 on the female part. The male part has an upper portion 305, the lower outer edges of which, indicated by the reference numerals 305', 305", are designed, on insertion of the wedge 303 into the female wedge 304, to cause the edges 305', 305" to abut against the edges 306, 306'. As in the previous solutions, the male component 303 in this case is prevented from penetrating so deeply into the female component 304 that reciprocal deformation of the components or material strain thereof occurs. Such deformation or material strain will inevitably render the disengagement of the two parts difficult. Further details can also be seen from Fig. 3c which shows the male part and the female part joined together. The male part 301 is in other respects similar to the male part 511 in Figs. 5f-5h. Similarly, the female part 302 is indicated by the reference numeral 512 in Fig. 5.

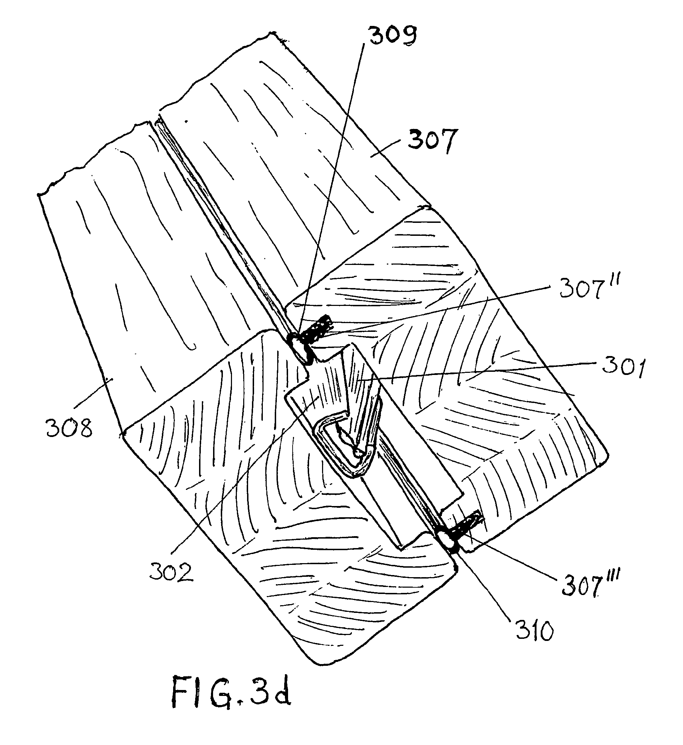

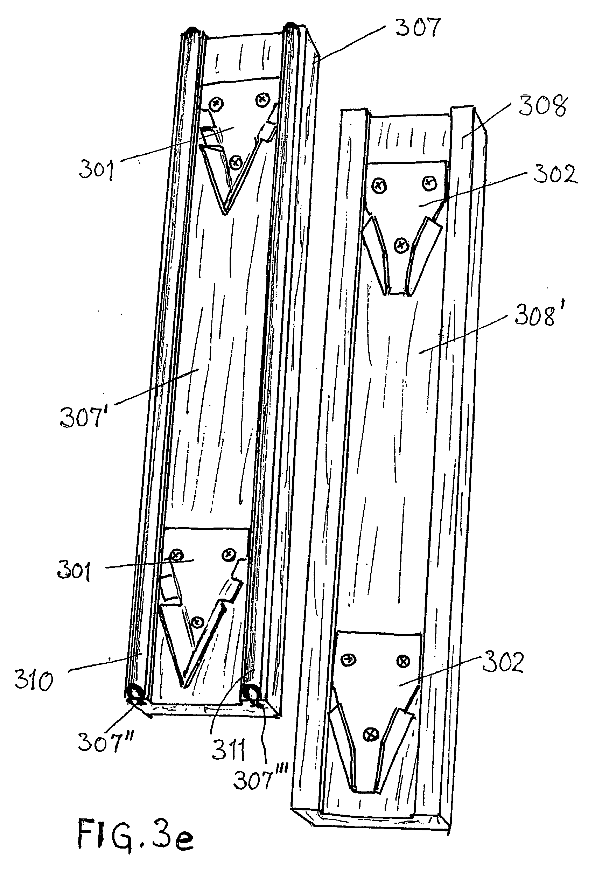

Fig. 3d is a perspective bottom view of the male part 301 and the female part 302 joined in wedging action for joining together two structural members 307, 308. These structural members 307, 308 are shown here as posts or studs, but it will be understood that the structural members 307, 308 maybe incorporated as, for example, studs in a wall element that has side panels and in addition upper and lower cross members in such an element. As is also evident from Fig. 3d and Fig. 3e, it will be seen that the male part(s) 301 is (are) located in a groove 307' in the structural element 307, and similarly the female part(s) 302 is (are) located in a groove 308' in the structural element 308. Elastically yielding sealing members or sealing strips 309 and 310 are disposed between the opposing edges of the structural elements, and may, for example, be fixed in a respective slot 307", 307''' in one of the structural elements 307. When the male parts and the female parts are brought into the engaged end position, the gap that will exist between the structural members will be sealed by the sealing members. At the same time, the sealing members will cause a tightness between the structural elements.

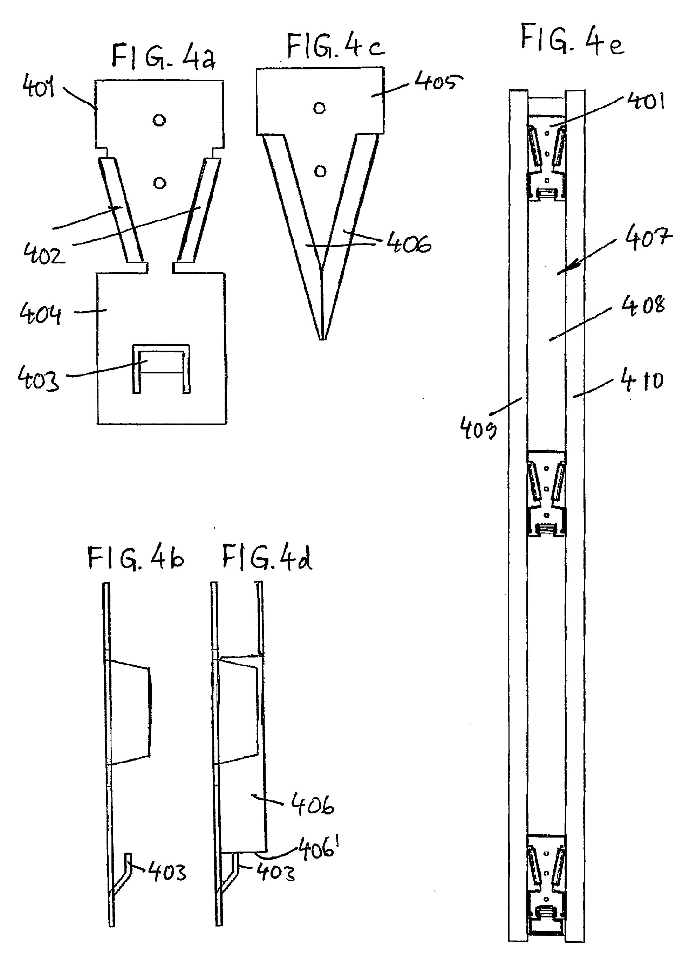

In another solution, as shown in Fig. 4, the female component 401 is equipped with a wedge-shaped part 402, and at the bottom has a projecting stop 403 which extends out from a portion 404 arranged in continuation of the wedge-shaped engaging part 402. Similarly, as shown in Fig. 4c, the male part 405 has a wedge-shaped engaging portion 406 designed to enter over a part of its length into engagement with the wedge-shaped engaging portion 402 on the female part. However, it will be seen from Fig. 4d that the stop 403 is arranged to abut against and support a narrowest end portion 406' of the wedge-shaped engaging part 406 of the male component.

In Fig. 4e it is shown how, for example, the female part as shown in Fig. 4a can be mounted, for instance on an end edge 407 of a structural element, where 408 denotes the posts of the structural element, and 409, 410 represents, for example, panels on the structural element.

In the solution shown in Figs. 5a-5d a spring element 502 is mounted on a female component 501 which, on the wedging engagement of the male component 503 with the female component 501, i.e., on engagement of the wedge-shaped portions 504, 505, comes to rest with its edge portion 506 against an edge portion 507 on the wedge-shaped engaging part of the male component 503, thereby releasably preventing axial movement of the male and female components in relation to each other. The lower portion of the spring 502 will rest against the male component at the upper portion of its wedge-shaped portion. To release the engagement between the female part 501 and the male part 505, by ending the inhibiting action of the spring 502, there is provided a release bar 508 which with the aid of a holder and guide 509 can be turned so that by means of its release pin 510 the bar 508 pushes the catch 506 back into a position in which it runs clear of an edge engagement with the male part 505. A variant and a practical embodiment of this device can be seen from Fig. 5e, in which the male part is indicated by the reference numeral 511 and the female part is indicated by the reference numeral 512. The male part has a wedge-shaped portion 513 and the female part has a corresponding wedge-shaped portion 514. A spring 515, preferably a curved, flat spring, is fastened to the female part by a screw 516. When the lower portion of the spring 515 is pressed in, the male part and the female part will have their mutual engagement released, whereupon the two parts can be separated.

A practical embodiment of that shown in Fig. 5e is shown in more detail in Figs. 5f-h. Fig. 5f shows a female part 512 with its wedge-shaped portion 514 and further provided with a spring 515. Fig. 5g shows a male part 511 with a wedge-shaped engaging portion 513. Fig. 5h shows the male component 511 and the female component 512. It will be seen that lugs 517 come to rest against an upper portion 514' of the wedge-shaped part 514 of the female component.

The spring 515 is preferably a leaf spring, and the release counterforce of the spring may be adjustable by the degree of tightening of the fixing screw 516.

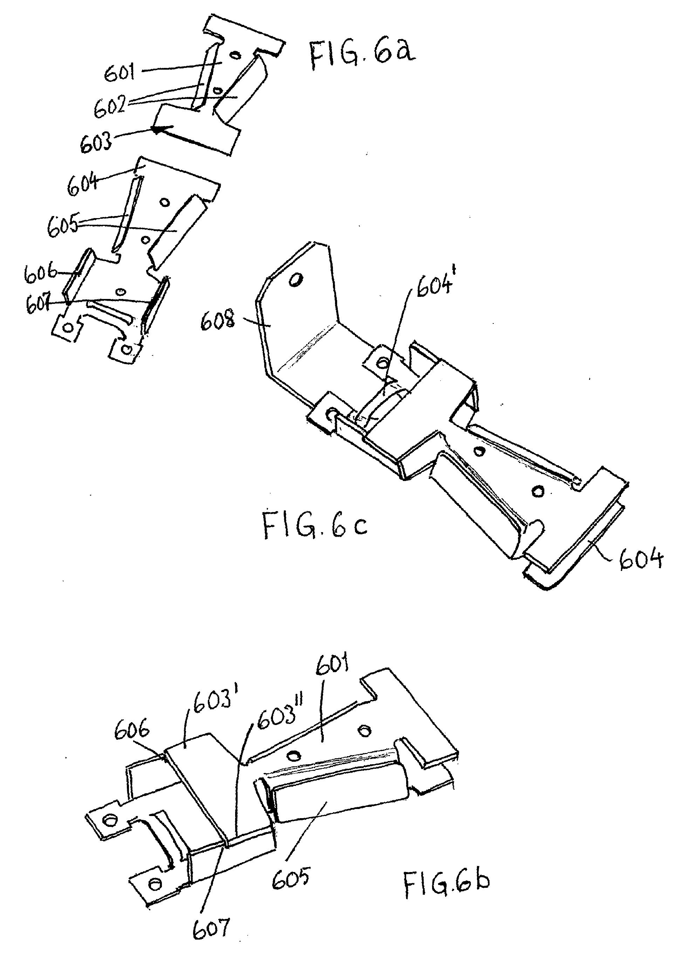

Another embodiment of the device is shown in Figs. 6a-6c. This embodiment is similar to the embodiment shown in Fig. 1 and in Fig.4. The figure shows a male part 601with wedge part 602 and a lug portion 603 designed to limit the movement of the male component 601 and the female component 604 in relation to each other in the axial direction when wedging engagement is to take place. The female part 604 has a wedge portion 605 and, at the bottom, the female component 604 has a portion arranged in continuation of its wedge-shaped engaging part 605 to abut against and support the lug portion 603 and its two lug parts 603', 603". The abutting portions on the female part are indicated respectively by the reference numerals 606 and 607. In this way, wedging cooperation is obtained between the male part 601 and 604, although without deformation or material strain of the male and/or female component occurring. In Fig. 6c it is shown how an end portion 604' of the female part 604 can be equipped with an angle piece 608 that engages with the end portion 604'. The angle piece 608 may be useful in special cases of assembly.

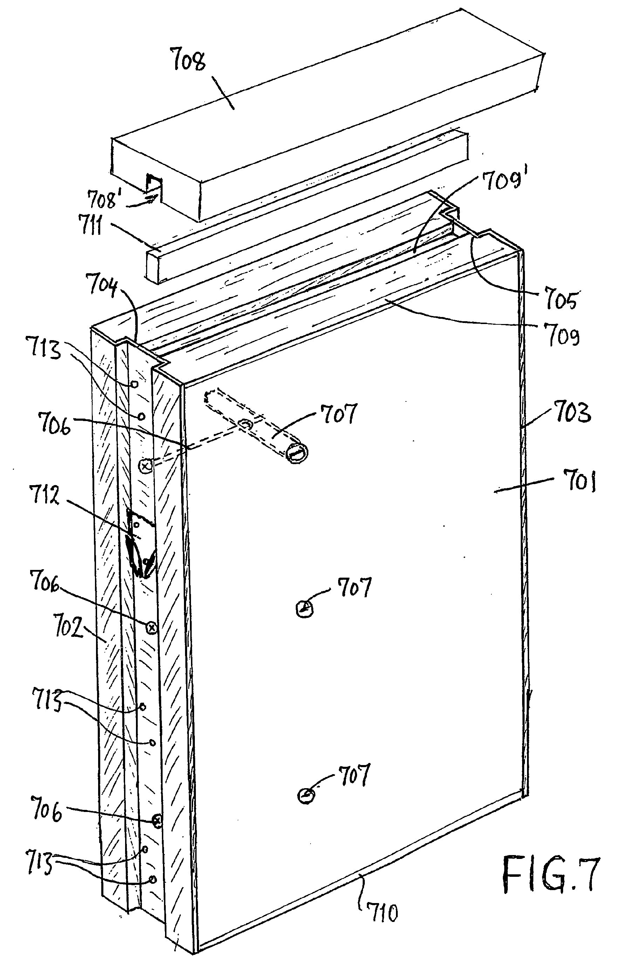

In Fig. 7 it is shown how the invention can be used, for example, in the case where the male and female parts cannot be screwed into wooden studding in building elements, but where, for example, the whole building element 701 is basically made of lightweight concrete (for example, so called "ytong") "aerated concrete", "clinker" concrete, so-called "Leca" elements, or a polymer material having at least a hard, UV-resistant surface, as opposed to the upper and lower cross members, panels on each side and optional insulation inside the building element cavity of an ordinary building element without studding. However, a satisfactory fixing for screws in lightweight concrete is difficult to obtain and gives poor fixing in the longitudinal direction of the screw. In Fig. 7 it is shown that along each vertical edge of the element 701 there is fastened a fitting 702, 703, for example, of profiled aluminium which runs in a slot 704, 705 in an end edge of the element. To affix such a fitting, a plurality of fixing screws 706 could be used, for example, which form threaded engagement with a fixing bolt 707 acting as a nut and extending transverse to the element 701. A fixing screw/fixing bolt solution of this kind is known from, *inter alia,* furniture constructions. As an alternative, it is possible to use an expanding bolt, but this does not give a simpler and cheaper solution and is less favourable as regards fitting. To ensure lateral anchoring of the element 701 at a top sill 708 and a bottom sill (not shown), the top and bottom of the element are preferably equipped with a profiled fitting 709, 710, for example, of aluminium, which lies in a slot (not shown) in the top and bottom of the element. The fitting, such as the fitting 709 in this case, has a countersink 709' designed partly to accommodate a coupling strip 711 which is to form engagement with a groove 708' in the top sill. The same will apply to a sole sill, although this is not shown here. The principle is described in more detail in the aforementioned WO document. Although the top sill and bottom sill, and coupling piece, may, for example, be made of wood, it is of course possible to envisage these elements made of, for example, extruded aluminium. It will be seen that the fitting 709, 710, together with the fittings 702 and 703, obtains good sideways anchoring on the element 701, and since they also engage with each other, a frame is virtually obtained around the element 701. Since the fittings 709, 710 are laterally in engagement with the fittings 702 and 703, and there is no vertical pull on the fittings 709, 710, these can simply be glued to the element 701 and/or to upper and lower ends of the fittings 702, 703. Fig. 7 also indicates a coupling element, here in the form of a female part 712, as for instance the female part 302, which is capable of being screwed securely into the vertical fitting, in this case the fitting 702. The reference numeral 713 indicates screw holes for additional coupling elements (not shown).

The solution shown in Fig. 7 will be particularly suitable in areas of the world where access to timber is limited or timber is expensive, or where climatic or environmental conditions, for example, large humidity swings, wood-eating insects or the like, dictate that the use of wood should be avoided to ensure form stability and the lifetime of the structure.

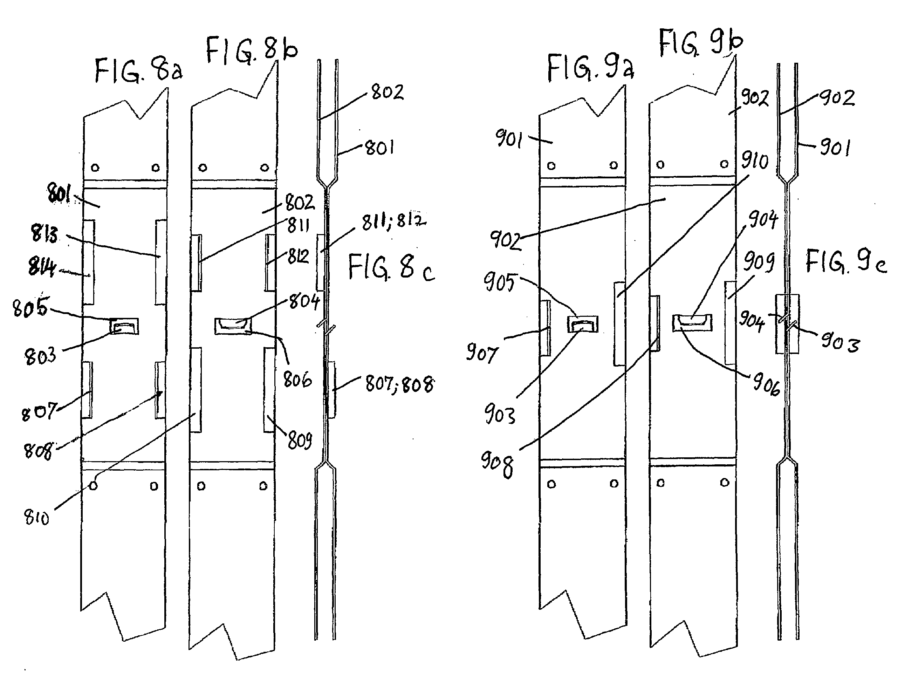

Figs. 8a and 8b show two connecting rails 801; 802 which have respectively both a male component 803; 804 and a female component 805; 806. Components 807, 808 engage in respective grooves 809, 810 on the opposing rail 802. Similarly, components 811, 812 on the rail 802 will engage with grooves or cut-outs 813, 814 in the rail 801. The components 807, 808, 811, 812 ensure lateral stabilisation and at the same time prevent the engagement between the male and female components causing material strain thereof, in that movement of the components 807, 808, 811, 812 in the vertical direction downwards in respective grooves 809, 810, 813, 814 is limited by the lower edge of these grooves.

Figs. 9a and 9b show a similar solution where there are two rails 901, 902 which in a similar manner are designed for fitting on an end edge of a structural element, for example, a building element (not shown). Each rail 901, 902 has respectively both a male component 903; 904 and a female component 905; 906. Components 907, 908 on respectively the rails 901 and 902 engage with respective grooves 909, 910 on opposing rail 902; 901, thereby ensuring lateral stabilisation and restriction of movement in the vertical direction, as shown and described for Fig. 8

## Claims

1. A device for connecting structural elements, the device consisting of a male component (301) and a female component (302) having at least over a part of their length wedge-shaped engaging parts (303, 304) having an almost dovetail-like, gradually decreasing cross-section, and wherein the male component and the female component are mountable on a face or edge of the structural elements in order, on movement of the structural elements relative to each other, to cause the male and female components to engage wedgingly, **characterised in that** the male component is equipped with two lugs (305', 305") that are arranged to abut against and be supported by respective edge portions (306, 306') on the wedge-shaped engaging part of the female component at the wider end of the female component's engaging part to prevent the male component from penetrating wedgingly to the maximum into the female component, thereby avoiding mutual deformation of the male and female components or material strain thereof on penetration.

2. A device as disclosed in claim 1, **characterised in**
**that** on the female component there is arranged a inhibiting device which, on the wedging engagement of the male component with the female component, enters releasable engaging abutment with an edge portion of the inhibiting device against an edge portion of the wedge-shaped engaging part of the male component, the inhibiting device thus releasably inhibiting against axial movement of the male and female components.

3. A device as disclosed in claim 2, **characterised in**
**that** the inhibiting device is a retaining spring (502) whose engagement with the male component is releasable by means of a release bar (508) which can be passed into a space defined by the male and female components in order, on the turning of the bar about its longitudinal axis, to provide by means of a pin (510) or eccentric disc affixed to the bar, a bending of the spring so as to release the engagement with the male component.

4. A device as disclosed in claim 3, **characterised in**
**that** the retaining spring is a leaf spring (515), and that the releasing counterforce of the spring is adjustable, for example, by means of at least one combined adjusting and fixing screw.

5. A device as disclosed in claim 1, further comprising at least one elastically yielding sealing member or sealing strip (309, 310) disposable between opposing edges of the structural elements.

6. A device as disclosed in one or more of claims 1-5, **characterised in that** the structural elements are formed of a non-compostable material, for example, lightweight concrete, and that a profiled attachment fitting for securing said male parts and female parts is secured to at least one end portion of the structural member.

## Patentansprüche

1. Vorrichtung zur Verbindung von Konstruktionselementen, welche Vorrichtung aus einer männlichen Komponente (301) und einer weiblichen Komponente (302) besteht, aufweisend zumindest über einen Teil ihrer Länge keilförmige Eingriffsteile (303, 304), die einen nahezu schwalbenschwanzähnlichen, allmählich abnehmenden Querschnitt aufweisen, und wobei die männliche Komponente und die weibliche Komponente auf einer Seite oder Kante der Konstruktionselemente montierbar sind, um bei Bewegung der Konstruktionselemente relativ zueinander die männliche und weibliche Komponente zu einem Keileingriff zu veranlassen, **dadurch gekennzeichnet, dass**
die männliche Komponente mit zwei Ansätzen (305', 305") versehen ist, die so angeordnet sind, dass sie an jeweiligen Kantenteilen (306, 306') anliegen und durch die gleichen Kantenteile auf dem keilförmigen Eingriffsteil der weiblichen Komponente auf dem breiteren Ende des Eingriffsteils der weiblichen Komponente unterstützt werden, um das keilartige Eindringen der männlichen Komponente bis zum Maximum in die weibliche Komponente zu verhindern, wobei eine gegenseitige Verformung der männlichen und weiblichen Komponente oder deren Materialbelastung bei Durchdringen vermieden wird.

2. Vorrichtung nach Anspruch 1, **dadurch gekennzeichnet, dass** auf der weiblichen Komponente eine Hemmvorrichtung angeordnet ist, die beim Keileingriff der männlichen Komponente mit der weiblichen Komponente mit einem Kantenteil der Hemmvorrichtung an einem Kantenteil des keilförmigen Eingriffsteils der männlichen Komponente zur lösbaren Eingriffsanlage kommt, wobei die Hemmvorrichtung dementsprechend für eine lösbare Hemmung einer Axialbewegung der männlichen und weiblichen Komponente sorgt.

3. Vorrichtung nach Anspruch 2, **dadurch gekennzeichnet, dass** die Hemmvorrichtung eine Haltefeder (502) ist, deren Eingriff mit der männlichen Komponente durch eine Lösestange (508) lösbar ist, die in einen durch die männliche und weibliche Komponente definierten Raum geleitet werden kann, um beim Drehen der Stange um ihre Längsachse eine Biegung der Feder mittels eines Stifts (510) oder einer an der Stange befestigten Exzenterscheibe herbeizuführen, damit der Eingriff mit der männlichen Komponente gelöst wird.

4. Vorrichtung nach Anspruch 3, **dadurch gekennzeichnet, dass** die Haltefeder eine Blattfeder (515) ist, und dass die lösende Gegenkraft der Feder beispielsweise durch zumindest eine kombinierte Justier- und Fixierschraube justierbar ist.

5. Vorrichtung nach Anspruch 1, zusätzlich umfassend zumindest ein elastisch nachgebendes Dichtungselement oder eine Dichtleiste (309, 310), welches/welche zwischen gegenüberliegenden Kanten der Konstruktionselemente verfügbar ist.

6. Vorrichtung nach einem oder mehreren der Ansprüche 1-5,
**dadurch gekennzeichnet, dass** die Konstruktionselemente aus einem nicht kompostierbaren Material, beispielsweise Leichtbeton, gebildet sind, und dass ein Profilbefestigungsanschlussstück zur Sicherung der männlichen Teile und weiblichen Teile zumindest an einem Endteil des Konstruktionsglieds gesichert ist.

## Revendications

1. Dispositif permettant de relier des éléments structuraux, le dispositif étant constitué d'un composant mâle (301) et d'un composant femelle (302) présentant, au moins sur une partie de leur longueur, des portions cunéiformes d'engagement (303, 304) avec une section transversale progressivement décroissante et presqu'en queue d'aronde, et dans lequel le composant mâle et le composant femelle peuvent être montés sur une face ou une arête des éléments structuraux pour, lors du déplacement des éléments structuraux l'un par rapport à l'autre, faire le composant mâle et le composant femelle s'engager de manière cunéiforme, **caractérisé en ce que** le composant mâle est pourvu de deux pattes (305', 305") arrangées de manière à s'appuyer contre et être supportées par des portions d'arête respectives (306, 306') sur la portion cunéiforme d'engagement du composant femelle au bout plus large de la portion d'engagement du composant femelle afin d'empêcher le composant mâle de pénétrer de manière cunéiforme au maximum dans le composant femelle, ainsi évitant une déformation mutuelle du composant mâle et du composant femelle ou une déformation matérielle de ceux-ci lors de la pénétration.

2. Dispositif selon la revendication 1, **caractérisé en ce que** sur le composant femelle, un dispositif d'arrêt est arrangé pour, lors de l'engagement cunéiforme du composant mâle avec le composant femelle, entrer en appui d'engagement déclenchable avec une portion d'arête du dispositif d'arrêt sur une portion d'arête de la portion cunéiforme d'engagement du composant mâle, le dispositif d'arrêt ainsi empêchant de manière déclenchable le déplacement axial du composant mâle et du composant femelle.

3. Dispositif selon la revendication 2, **caractérisé en ce que** le dispositif d'arrêt est un ressort de retenue (502) dont l'engagement avec le composant mâle peut être déclenché au moyen d'une tige de désengagement (508) qui peut être passée dans un espace défini par le composant mâle et le composant femelle afin de former, lors du pivotement de la tige autour de son axe longitudinal et au moyen d'un tenon (510) ou d'un disque excentrique fixé à la tige, un pliage du ressort pour déclencher l'engagement avec le composant mâle.

4. Dispositif selon la revendication 3, **caractérisé en ce que** le ressort de retenue est un ressort à lame (515), et **en ce que** la contre-force du ressort est réglable, par exemple au moyen d'au moins une vis combinée de réglage et de fixation.

5. Dispositif selon la revendication 1, en outre comprenant au moins un élément ou une bande d'étanchéité élastiquement souple (309, 310) à arranger entre des arêtes opposées des éléments structuraux.

6. Dispositif selon l'une ou plusieurs des revendications 1 à 5, **caractérisé en ce que** les éléments structuraux sont formés de matériaux non-compostables, par exemple du béton léger, et **en ce qu'**une ferrure profilée de fixation destinée à fixer les composants mâles et les composants femelles est fixée à au moins une extrémité de l'élément structural.
